(19)

Europäisches
Patentamt
European
Patent Office
Office européen
des brevets

(11) **EP 4 783 445 A1**

(12) **EUROPEAN PATENT APPLICATION**
published in accordance with Art. 153(4) EPC

(43) Date of publication:
 **29.07.2026 Bulletin 2026/31**

(21) Application number: **25842104.9**

(22) Date of filing: **25.07.2025**

(51) International Patent Classification (IPC):
 **H02M 3/335** *(2006.01)*

(52) Cooperative Patent Classification (CPC):
 **Y02B 70/10**

(86) International application number:
 **PCT/CN2025/110675**

(87) International publication number:
 **WO 2026/091711 (07.05.2026 Gazette 2026/19)**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH LA MA MD TN**

(30) Priority: **01.11.2024 CN 202411546524**

(71) Applicant: **SHENZHEN POWEROAK NEWENER
 CO., LTD
 Shenzhen, Guangdong 518000 (CN)**

(72) Inventors:
 • **MA, Hui
 Shenzhen, Guangdong 518000 (CN)**

 • **YOU, Yongliang
 Shenzhen, Guangdong 518000 (CN)**
 • **ZHAO, Fan
 Shenzhen, Guangdong 518000 (CN)**
 • **CHEN, Feilong
 Shenzhen, Guangdong 518000 (CN)**
 • **MA, Changfeng
 Shenzhen, Guangdong 518000 (CN)**
 • **LI, Xianren
 Shenzhen, Guangdong 518000 (CN)**

(74) Representative: **Zacco Sweden AB
 P.O. Box 5581
 Löjtnantsgatan 21
 114 85 Stockholm (SE)**

(54) **GRID CONNECTION CONTROL METHOD AND APPARATUS FOR VOLTAGE CONVERSION CIRCUIT, AND STORAGE MEDIUM**

(57) This application relates to a grid-connected control method and a grid-connected control device for a voltage conversion circuit, and a storage medium. The method includes: detecting whether an output bus voltage of the voltage conversion circuit is less than a peak voltage of a power grid during a process of connecting the voltage conversion circuit to the power grid; and controlling switching transistors in the primary-side full-bridge circuit and switching transistors in the secondary-side full-bridge circuit to be in preset switching states when the output bus voltage is less than the peak voltage, so that the primary-side full-bridge circuit, the transformer, the resonant circuit, the secondary-side full-bridge circuit and the output capacitor form a boost circuit, and the boost circuit is configured to boost the output bus voltage to be equal to the peak voltage. This method can improve grid compliance of the voltage conversion circuit.

**EP 4 783 445 A1**

```
detecting whether an output bus voltage of the voltage conversion circuit
is less than a peak voltage of a power grid during a process of connecting    201
the voltage conversion circuit to the power grid
```

```
controlling switching transistors in the primary-side full-bridge circuit
and switching transistors in the secondary-side full-bridge circuit to be in
preset switching states when the output bus voltage is less than the peak      202
voltage, so that the primary-side full-bridge circuit, the transformer, the
resonant circuit, the secondary-side full-bridge circuit and the output
capacitor form a boost circuit, and the boost circuit is configured to boost
the output bus voltage to be equal to the peak voltage
```

FIG. 2

# Description

## RELATED APPLICATIONS

The present application claims the priority of Chinese patent application No. 2024115465240, filed on November 1, 2024, and entitled "GRID-CONNECTED CONTROL METHOD AND DEVICE FOR VOLTAGE CONVERSION CIRCUIT, AND STORAGE MEDIUM", which is incorporated herein by reference in its entirety.

## TECHNICAL FIELD

This application relates to the field of voltage conversion circuit technology, and in particular to a grid-connected control method and a grid-connected control device for a voltage conversion circuit, and a storage medium.

## BACKGROUND

Currently, when an open-loop inductor-inductor-capacitor (LLC) circuit is used in an inverter, the output bus voltage gain of the open-loop LLC circuit is fixed. During the process of connecting the inverter to the grid, damages to components are likely to occur, thus resulting in poor grid compliance of the inverter.

## SUMMARY

In view of this, and in order to address the above technical problems, it is necessary to provide a grid-connected control method and a grid-connected control device for a voltage conversion circuit, and a storage medium, which can improve the grid compliance of the voltage conversion circuit.

A first aspect of the application provides a grid-connected control method for a voltage conversion circuit. The voltage conversion circuit includes an open-loop inductor-inductor-capacitor (LLC) circuit, the LLC circuit includes a primary-side full-bridge circuit, a transformer, a resonant circuit, a secondary-side full-bridge circuit, and an output capacitor connected in sequence, and the method includes:

> detecting whether an output bus voltage of the voltage conversion circuit is less than a peak voltage of a power grid during a process of connecting the voltage conversion circuit to the power grid; and
> controlling switching transistors in the primary-side full-bridge circuit and switching transistors in the secondary-side full-bridge circuit to be in preset switching states when the output bus voltage is less than the peak voltage, so that the primary-side full-bridge circuit, the transformer, the resonant circuit, the secondary-side full-bridge circuit and the output capacitor form a boost circuit, and the boost circuit is configured to boost the output bus voltage to be equal to the peak voltage.

In an embodiment, controlling the switching transistors in the primary-side full-bridge circuit and the switching transistors in the secondary-side full-bridge circuit to be in the preset switching states includes:

> determining a primary-to-secondary switching transistor phase difference based on the peak voltage and the output bus voltage; and
> controlling the switching transistors in the primary-side full-bridge circuit and the switching transistors in the secondary-side full-bridge circuit to be in the preset switching states based on the primary-to-secondary switching transistor phase difference.

In an embodiment, determining the primary-to-secondary switching transistor phase difference based on the peak voltage and the output bus voltage includes: regulating the output bus voltage by using a proportional integral (PI) regulation algorithm to obtain the primary-to-secondary switching transistor phase difference, wherein the peak voltage of the power grid is configured as a reference voltage for the PI regulation algorithm.

In an embodiment, the primary-side full-bridge circuit includes a first switching transistor, a second switching transistor, a third switching transistor, and a fourth switching transistor; the secondary-side full-bridge circuit includes a fifth switching transistor, a sixth switching transistor, a seventh switching transistor, and an eighth switching transistor; controlling the switching transistors in the primary-side full-bridge circuit and the switching transistors in the secondary-side full-bridge circuit to be in the preset switching states based on the primary-to-secondary switching transistor phase difference, includes:

> controlling the fifth switching transistor and the sixth switching transistor to be turned off; and
> controlling the first switching transistor, the second switching transistor, the third switching transistor, the fourth switching transistor, the seventh switching transistor, and the eighth switching transistor to be in the preset switching states based on the primary-to-secondary switching transistor phase difference.

In an embodiment, controlling the first switching transistor, the second switching transistor, the third switching transistor, the fourth switching transistor, the seventh switching transistor, and the eighth switching transistor to be in the preset switching states based on the primary-to-secondary switching transistor phase difference, includes:

> based on the primary-to-secondary switching transistor phase difference, controlling the first switching transistor to be turned off, the second switching transistor to be turned on, the third switching transistor to be turned on, the fourth switching transistor to be turned off, the seventh switching transistor to be turned off, and the eighth switching transistor to be turned on during a first time period, so that a first energy storage circuit is formed by the second switching transistor, the third switching transistor, the transformer, the resonant circuit, the sixth switching transistor, and the eighth switching transistor, and the first energy storage circuit is configured to charge energy storage elements in the resonant circuit; and

based on the primary-to-secondary switching transistor phase difference, controlling the first switching transistor to be turned off, the second switching transistor to be turned on, the third switching transistor to be turned on, the fourth switching transistor to be turned off, the seventh switching transistor to be turned off, and the eighth switching transistor to be turned off during a second time period, so that the first charging circuit is formed by the second switching transistor, the third switching transistor, the transformer, the resonant circuit, the sixth switching transistor, the seventh switching transistor, and the output capacitor, and the first charging circuit is configured to charge the output capacitor through the energy storage elements to boost the output bus voltage across the output capacitor. The second time period following the first time period in chronological order.

In an embodiment, controlling the first switching transistor, the second switching transistor, the third switching transistor, the fourth switching transistor, the seventh switching transistor, and the eighth switching transistor to be in the preset switching states based on the primary-to-secondary switching transistor phase difference, further includes:

based on the primary-to-secondary switching transistor phase difference, controlling the first switching transistor to be turned on, the second switching transistor to be turned off, the third transistor to be turned off, the fourth switching transistor to be turned on, the seventh switching transistor to be turned on, and the eighth switching transistor to be turned off during a third time period, so that a second energy storage circuit is formed by the first switching transistor, the fourth switching transistor, the transformer, the resonant circuit, the fifth switching transistor, and the seventh switching transistor, and the second energy storage circuit is configured to charge the energy storage elements; and
based on the primary-to-secondary switching transistor phase difference, controlling the first switching transistor to be turned on, the second switching transistor to be turned off, the third transistor to be turned off, the fourth switching transistor to be turned on, the seventh switching transistor to be turned off, and the eighth switching transistor to be turned off during a fourth time period, so that a second charging circuit is formed by the first switching transistor, the fourth switching transistor, the transformer, the resonant circuit, the fifth switching transistor, the eighth switching transistor, and the output capacitor, and the second charging circuit is configured to charge the output capacitor through the energy storage elements to boost the output bus voltage across the output capacitor; and the third time period following the second time period in chronological order, and the fourth time period following the third time period in chronological order.

In an embodiment, the voltage conversion circuit further includes an inverter circuit, and the inverter circuit is connected between the open-loop LLC circuit and the power grid; and after controlling the switching transistors in the primary-side full-bridge circuit and the switching transistors in the secondary-side full-bridge circuit to be in the preset switching states, the method further includes:

controlling switching transistors in the inverter circuit to be turned off, so that the switching transistors in the inverter circuit form a rectifier circuit.

In an embodiment, the method further includes: when a zero-crossing point of the grid voltage is detected, controlling an alternating current (AC) side relay of the inverter circuit to be closed, and controlling the switching transistors in the primary-side full-bridge circuit and the switching transistors in the secondary-side full-bridge circuit to be in normal switching states.

A second aspect of the application provides a grid-connected control device for a voltage conversion circuit. The voltage conversion circuit includes an open-loop inductor-inductor-capacitor (LLC) circuit, the LLC circuit includes a primary-side full-bridge circuit, a transformer, a resonant circuit, a secondary-side full-bridge circuit, and an output capacitor connected in sequence. The device includes:

a detection module, configured to detect whether an output bus voltage of the voltage conversion circuit is less than a peak voltage of a power grid during a process of connecting the voltage conversion circuit to the power grid; and
a control module, configured to, when the output bus voltage is less than the peak voltage, control switching transistors in the primary-side full-bridge circuit and switching transistors in the secondary-side full-bridge circuit to be in preset switching states; wherein the primary-side full-bridge circuit, the transformer, the resonant circuit, the secondary-side full-bridge circuit and the output capacitor form a boost circuit, and the boost circuit is configured to boost the output bus voltage to be equal to the peak voltage.

A third aspect of the application provides a computer device including a memory and a processor. The memory has a computer program stored thereon, and the processor, when executing the computer program, performs steps of the method of the first aspect above.

A fourth aspect of the application provides a computer-readable storage medium, having a computer program stored thereon. the computer program, when executed by a processor, performs steps of the method of the first aspect above.

A fifth aspect of the application provides a computer program product, including a computer program. The computer program, when executed by a processor, causes the processor to perform steps of the method of the first aspect above.

In the above-mentioned grid-connected control method and device for the voltage conversion circuit, and the storage medium, the voltage conversion circuit includes an open-loop inductor-inductor-capacitor (LLC) circuit, the LLC circuit comprises a primary-side full-bridge circuit, a transformer, a resonant circuit, a secondary-side full-bridge circuit, and an output capacitor connected in sequence. It is detected whether an output bus voltage of the voltage conversion circuit is less than a peak voltage of a power grid during a process of connecting the voltage conversion circuit to the power grid. The switching transistors in the primary-side full-bridge circuit and the switching transistors in the secondary-side full-bridge circuit are controlled to be in the preset switching states when the output bus voltage is less than the peak voltage, so that the primary-side full-bridge circuit, the transformer, the resonant circuit, the secondary-side full-bridge circuit and the output capacitor form a boost circuit, and the boost circuit is configured to boost the output bus voltage to be equal to the peak voltage. Thus, when the output bus voltage of the voltage conversion circuit is less than the peak voltage of the power grid, the output bus voltage of the voltage conversion circuit is boosted by the boost circuit formed by the primary-side full-bridge circuit, the transformer, the resonant circuit, the secondary-side full-bridge circuit, and the output capacitor, thereby preventing the voltage conversion circuit, when connected to the grid, from causing the output bus voltage to be too far from the peak voltage of the power grid and causing an excessively large inrush current, and avoiding damages to the components of the voltage conversion circuit and improving the grid compliance of the voltage conversion circuit.

BRIEF DESCRIPTION OF THE DRAWINGS

To more clearly illustrate the technical solutions in the embodiments of this application or the conventional technology, the drawings used in the description of the embodiments or the conventional technology will be briefly described below. Obviously, the drawings described below are only embodiments of this application. For those ordinary skilled in the art, other drawings may be obtained based on the disclosed drawings without creative effort.

FIG. 1 is a view showing an application environment of a grid-connected control method for a voltage conversion circuit according to an embodiment;
FIG. 2 is a schematic flowchart of a grid-connected control method for a voltage conversion circuit according to an embodiment;
FIG. 3 is a schematic view showing modules of an open-loop LLC circuit according to another embodiment;
FIG. 4 is a schematic flowchart of controlling, by a computer device, switching transistors included in a primary-side full-bridge circuit and switching transistors included in a secondary-side full-bridge circuit to be in preset switching states according to another embodiment;
FIG. 5 is a circuit diagram of an open-loop LLC circuit according to another embodiment;
FIG. 6 is a schematic diagram showing driving waveforms for switching transistors in an open-loop LLC circuit in the related technology;
FIG. 7 is a flowchart of step 402 according to another embodiment;
FIG. 8 is a circuit diagram of an open-loop LLC circuit according to another embodiment;
FIG. 9 is a schematic diagram showing current waveforms of the switching transistors in the open-loop LLC circuit according to another embodiment;
FIG. 10 is a schematic diagram showing voltage waveforms of the switching transistors in the open-loop LLC circuit according to another embodiment;
FIG. 11 shows a circuit diagram of an open-loop LLC circuit according to another embodiment;
FIG. 12 shows a circuit diagram of an open-loop LLC circuit according to another embodiment;
FIG. 13 shows a circuit diagram of an open-loop LLC circuit in another embodiment;
FIG. 14 is a schematic diagram showing driving waveforms for the switching transistors in the open-loop LLC circuit according to another embodiment;
FIG. 15 is a schematic view showing modules of a voltage conversion circuit according to another embodiment;
FIG. 16 is a schematic flowchart of a grid-connected control method for a voltage conversion circuit according to another embodiment;
FIG. 17 shows a circuit diagram of an inverter circuit according to another embodiment;
FIG. 18 is a block diagram showing a structure of a grid-connected control device for a voltage conversion circuit according to an embodiment; and
FIG. 19 is a view showing an internal structure of a computer device according to an embodiment.

DETAILED DESCRIPTION OF THE EMBODIMENTS

The technical solutions of the embodiments of this application will be clearly and completely described below with reference to the accompanying drawings of this application. Obviously, the described embodiments are only some embodiments of this application, but not all embodiments. Based on the embodiments of this application, all other embodiments obtained by those ordinary skilled in the art without creative effort are within the scope of protection of this application.

When an open-loop LLC circuit is used in an inverter, an output bus voltage gain is fixed. When an input voltage (i.e., a battery voltage) applied to the primary side of the open-loop LLC circuit is too low, the output bus voltage will be much lower than a peak voltage of the grid. If the inverter is forcibly connected to the grid (or simply connected to the grid), the large difference between the output bus voltage and the peak voltage of the grid will cause an excessively large instantaneous inrush current, which can easily damage the inverter components and result in poor grid compliance of the inverter. In this case, even without grid connection, the inverter still suffers from poor grid compliance, and the problem of poor grid compliance of the inverter will also exist.

Therefore, embodiments of this application provide a grid-connected control method and a grid-connected control device for a voltage conversion circuit, and a storage medium, which can improve the grid compliance of the voltage conversion circuit.

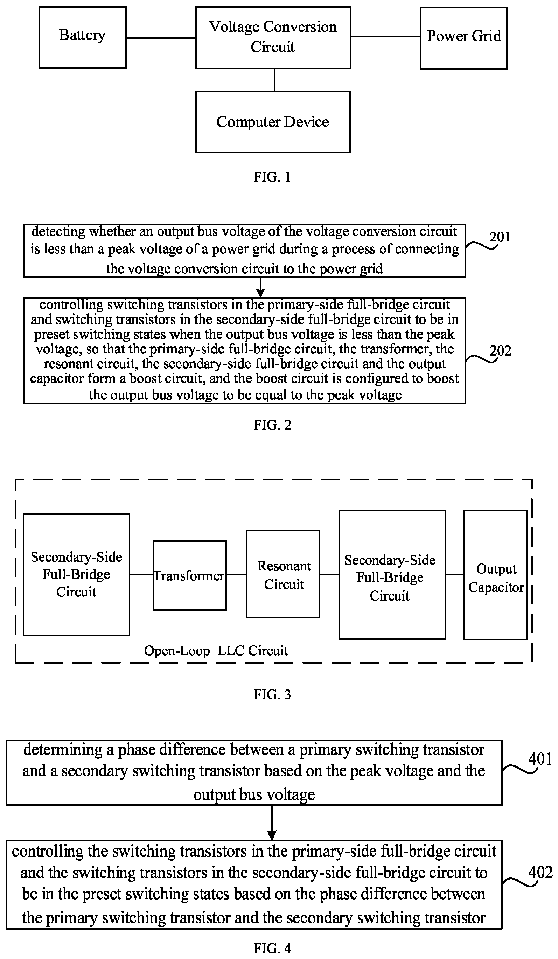

The grid-connected control method for the voltage conversion circuit provided by the embodiments of this application can be applied to the application environment shown in FIG. 1. A battery is connected to the voltage conversion circuit, the voltage conversion circuit is connected to the power grid, and the voltage conversion circuit is also connected to a computer device. The voltage conversion circuit can be configured in an inverter to perform voltage conversion, such as converting direct current (DC) to alternating current (AC).

The computer device can be a server, and the server can be a standalone physical server, a server cluster consisting of multiple physical servers or a distributed system, or a cloud server that provides cloud computing services.

In an exemplary embodiment, as shown in FIG. 2, a grid-connected control method for a voltage conversion circuit is provided. Taking this method applied to the computer device in FIG. 1 as an example, the method includes steps 201 and 202.

In Step 201, during a process of connecting the voltage conversion circuit to a power grid, detect whether an output bus voltage of the voltage conversion circuit is less than a peak voltage of the power grid.

In an embodiment of the present application, the voltage conversion circuit includes an open-loop LLC circuit. For example, referring to FIG. 3, FIG. 3 is a schematic view showing modules of an open-loop LLC circuit. As shown in FIG. 3, the open-loop LLC circuit includes a primary-side full-bridge circuit, a transformer, a resonant circuit, a secondary-side full-bridge circuit, and an output capacitor connected in sequence. The primary-side full-bridge circuit is connected to a battery, and the voltage across the output capacitor is the output bus voltage of the voltage conversion circuit.

The output bus voltage of the voltage conversion circuit is affected by the input voltage (i.e., the battery voltage) applied to the primary side of the open-loop LLC circuit. When the battery voltage is too low, the output bus voltage of the open-loop LLC circuit may be lower than the peak voltage of the power grid, thus resulting in an excessive inrush current during grid connection.

In an embodiment of the present application, the computer device can sample the output bus voltage of the voltage conversion circuit through a sampling circuit, and then detect whether the output bus voltage of the voltage conversion circuit is less than the peak voltage of the power grid. If the output bus voltage of the voltage conversion circuit is greater than or equal to the peak voltage of the power grid, it indicates that the instantaneous inrush current during grid connection will not be too large. Therefore, existing control strategies can be used to control the voltage conversion circuit to be connected to the power grid.

If the output bus voltage of the voltage conversion circuit is less than the peak voltage of the power grid, the following steps of the grid-connected control method for the voltage conversion circuit of the embodiment of the present application will continue to be executed to avoid the case that, due to the large difference between the output bus voltage and the peak voltage of the power grid, the instantaneous inrush current is too large when the voltage conversion circuit is connected to the power grid.

In Step 202, when the output bus voltage is less than the peak voltage, control switching transistors in the primary-side full-bridge circuit and switching transistors in the secondary-side full-bridge circuit to be in preset switching states, so that the primary-side full-bridge circuit, the transformer, the resonant circuit, the secondary-side full-bridge circuit and the output capacitor form a boost circuit.

The boost circuit is configured to boost the output bus voltage to be equal to the peak voltage.

The aforementioned preset switching states differ from the normal switching states of the switching transistors in the primary-side full-bridge circuit and switching transistors secondary-side full-bridge circuit during the grid connection process of a traditional voltage conversion circuit. Specifically, in an embodiment of the present application, when the output bus voltage of the voltage conversion circuit is lower than the peak voltage of the grid, the computer device alters conduction control logics of the switching transistors in both the primary-side full-bridge circuit and the secondary-side full-bridge circuit, and the boost circuit is formed by the primary-side full-bridge circuit, the transformer, the resonant circuit, the secondary-side full-bridge circuit, and the output capacitor, and is configured to increase the output bus voltage.

For example, the boost circuit may have an energy storage stage and a charging stage. In the energy storage stage, energy is stored by charging energy storage elements in the resonant circuit. In the charging stage, the energy storage elements in the resonant circuit are discharged to charge the output capacitor, thereby increasing the voltage across the output capacitor, that is, increasing the output bus voltage of the voltage conversion circuit. The boost circuit is realized through the charging and discharging of the energy storage element in the resonant circuit.

In the above embodiment, when the output bus voltage of the voltage conversion circuit is less than the peak voltage of the power grid, the output bus voltage of the voltage conversion circuit is boosted by the boost circuit formed by the primary-side full-bridge circuit, the transformer, the resonant circuit, the secondary-side full-bridge circuit, and the output capacitor. That is, by improving the design of existing circuit components, the voltage conversion circuit, when connected to the grid, can be prevented from causing the output bus voltage to be too far from the peak voltage of the power grid and causing an excessively large inrush current, thus avoiding damages to the components of the voltage conversion circuit and improving the grid compliance of the voltage conversion circuit.

Based on the embodiment shown in FIG. 2, referring to FIG. 4, an embodiment of controlling, by the computer device, the switching transistors in the primary-side full-bridge circuit and the switching transistors in the secondary-side full-bridge circuit to be in the preset switching states is exemplarily described herein. As shown in FIG. 4, the computer device can execute following steps 401 and 402 shown in FIG. 4.

In step 401, a primary-to-secondary switching transistor phase difference is determined based on the peak voltage and the output bus voltage.

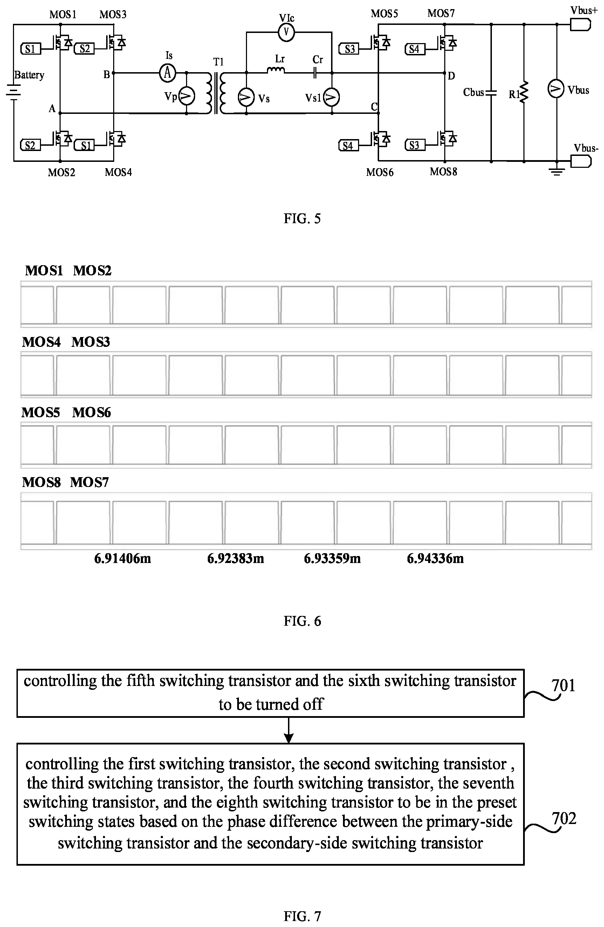

Referring to FIG. 5, FIG. 5 is a schematic circuit diagram of an exemplary open-loop LLC circuit. In the open-loop LLC circuit shown in FIG. 5, the primary-side full-bridge circuit includes a first switching transistor MOS1, a second switching transistor MOS2, a third switching transistor MOS3, and a fourth switching transistor MOS4. T1 shown in FIG. 5 denotes the transformer. The resonant circuit includes a resonant inductor Lr and a resonant capacitor Cr as shown in FIG. 5. The secondary-side full-bridge circuit includes a fifth switching transistor MOS5, a sixth switching transistor MOS6, a seventh switching transistor MOS7, and an eighth switching transistor MOS8. $C_{bus}$ shown in FIG. 5 denotes the output capacitor. R1 denotes an output dummy load of the open-loop LLC circuit. The resistance value of R1 is relatively large. $V_{bus}$ denotes the output bus voltage of the voltage conversion circuit.

In the related technology, MOS1/MOS4 and MOS5/MOS8 are used as E- group bridge arms on the primary and secondary sides, respectively, with the same driving waveforms; MOS2/MOS3 and MOS6/MOS7 are used as F- group bridge arms on the primary and secondary sides, respectively, with the same driving waveforms. MOS1/MOS2, MOS3/MOS4, MOS5/MOS6, and MOS7/MOS8 are four complementary drive pairs. The effective driving levels (high levels) and duty cycles of the E- group bridge arms and the F- group bridge arms are the same, with a phase difference of 180 degrees. After the open-loop LLC circuit is started, the output bus voltage $V_{bus}$ reaches a maximum value. The driving waveform for each switching transistor in the open-loop LLC circuit is shown in FIG. 6. When all the switching transistors (MOS1, MOS4, MOSS, MOS8) of the E-group bridge arms are turned on, all the switching transistors (MOS2, MOS3, MOS6, MOS7) of the F -group bridge arms are turned off. When all the switching transistors in the F-group bridge arms are turned on, all the switching transistors in the E-group bridge arms are turned off.

In the related technology, since $V_{bus} \approx V_{bat} * Ns/Np$ ($V_{bus}$ denotes the output bus voltage, $V_{bat}$ denotes the battery voltage, and Ns denotes a turn ratio of the primary winding of the transformer in the open-loop LLC circuit, and Np is a turn ratio of the secondary winding of the transformer in the open-loop LLC circuit), when the battery voltage $V_{bat}$ decreases as the battery capacity decreases, $V_{bus}$ also decreases accordingly. $\Delta V = V_{gridpeak} - V_{bus}$ ($V_{gridpeak}$ denotes the peak voltage of the power grid). When $V_{bus} < V_{gridpeak}$, $\Delta V > 0$, and $Ic = C_{bus} * \frac{\Delta V}{\Delta T1}$ (Ic denotes the instantaneous inrush current during the grid connection, $C_{bus}$ denotes the capacitance of the output capacitor, $\Delta T1$ denotes the instantaneous time of the grid connection), the larger the $\Delta V$ is, the larger the instantaneous inrush current Ic during the grid connection will be. When the instantaneous inrush current exceeds a rated current threshold of the components, the components will be damaged.

In an embodiment of the present application, the computer device determines the primary-to-secondary switching transistor phase difference based on the peak voltage of the power grid and the output bus voltage of the voltage conversion circuit. Referring to FIG. 5, the phase difference *Angle* between the primary-side switching transistor and the secondary-side switching transistor can be a phase difference between the first switching transistor MOS 1 and the eighth switching transistor MOS8, or a phase difference between the second switching transistor MOS2 and the seventh switching transistor MOS7. The larger the $\Delta V$ is, the larger the phase difference *Angle* between the primary-side switching transistor and the secondary-side switching transistor is. That is, the magnitude of $\Delta V$ is positively correlated with the magnitude of the phase difference *Angle* between the primary-side switching transistor and the secondary-side switching transistor. The larger the phase difference *Angle,* the larger the voltage boost amplitude of the boost circuit formed by the primary-side full-bridge circuit, the transformer, the resonant circuit, the secondary-side full-bridge circuit, and the output capacitor.

In an embodiment, the output bus voltage is regulated by the computer device using a PI (Proportional Integral) regulation algorithm, that is, a PI regulation is performed on the output bus voltage to obtain the phase difference *Angle* between the primary-side switching transistor and the secondary-side switching transistor. The peak voltage of the power grid is configured as a reference voltage ($V_{ref}$) for the PI regulation algorithm. Based on the PI regulation algorithm, a high-precision primary-to-secondary switching transistor phase difference can be obtained.

In Step 402, control the switching transistors in the primary-side full-bridge circuit and the switching transistors in the secondary-side full-bridge circuit to be in preset switching states based on the primary-to-secondary switching transistor phase difference.

After obtaining the phase difference *Angle* of the primary-side switching transistor and the secondary-side switching transistor, the computer device controls the switching transistors in the primary-side full-bridge circuit and the switching transistors in the secondary-side full-bridge circuit to be in the preset switching states based on the phase difference *Angle.*

In an embodiment of step 402, referring to FIG. 7, step 402 may include steps 701 and 702 shown in FIG. 7.

In Step 701, control the fifth switching transistor and the sixth switching transistor to be turned off.

The computer device controls the fifth switching transistor MOSS and the sixth switching transistor MOS6 to be turned off. After the fifth switching transistor MOSS and the sixth switching transistor MOS6 are turned off, they are equivalent to diodes D in the open-loop LLC circuit based on the unidirectional conduction characteristics of the internal diodes of the fifth switching transistor MOS5 and sixth switching transistor MOS6.

In Step 702, control the first switching transistor, the second switching transistor, the third switching transistor, the fourth switching transistor, the seventh switching transistor, and the eighth switching transistor to be in the preset switching states based on the primary-to-secondary switching transistor phase difference.

After the computer device controls the fifth switching transistor MOSS and the sixth switching transistor MOS6 to be turned off, the conduction of other switching transistors in the open-loop LLC circuit can be controlled normally, thus, the computer device controls the first switching transistor MOS1, the second switching transistor MOS2, the third switching transistor MOS3, the fourth switching transistor MOS4, the seventh switching transistor MOS7 and the eighth switching transistor MOS8 in the open-loop LLC circuit to be in the preset switching states according to the primary-to-secondary switching transistor phase difference.

No additional hardware circuits are required to be designed for the above embodiments. Based on the existing switching transistors and energy storage element in the existing open-loop LLC circuit topology, the primary-to-secondary switching transistor phase difference is obtained through the PI regulation. The grid-connected control method of this application embodiment can be executed based on the primary-to-secondary switching transistor phase difference, so that the output bus voltage of the voltage conversion circuit is stabilized at the peak voltage of the grid. The implementation of the method is simple and easy, and is beneficial to cost control.

The implementation of step 702 is described hereinafter by taking the open-loop LLC circuit shown in FIG. 5 as an example.

During a first time period, based on the primary-to-secondary switching transistor phase difference, the computer device controls the first switching transistor MOS1 to be turned off, the second switching transistor MOS2 to be turned on, the third switching transistor MOS3 to be turned on, the fourth switching transistor MOS4 to be turned off, the seventh switching transistor MOS7 to be turned off, and the eighth switching transistor MOS8 to be turned on during the first time period.

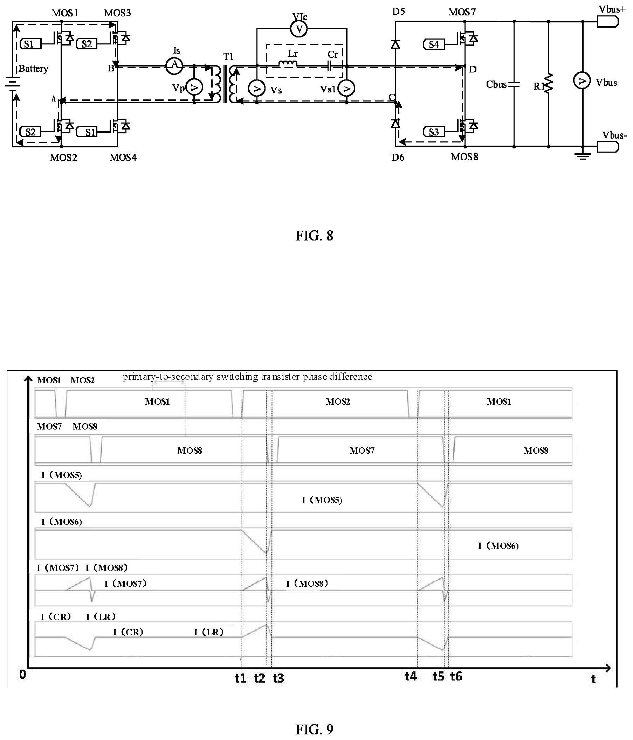

Referring to FIG. 8, based on the phase difference *Angle* between the primary-side switching transistor and the secondary-side switching transistor, the computer device controls a conduction time period of the second switching transistor MOS2 and a conduction time period of the eighth switching transistor MOS8 to overlap. That is, during the first time period, both the second switching transistor MOS2 and the eighth switching transistor MOS8 are in a conducting state, and at this time, the second switching transistor MOS2 and the third switching transistor MOS3 at the primary side of the transformer, the transformer, and the resonant circuit and the sixth switching transistor MOS6 (i.e., the diode D6 shown in FIG. 8) and the eighth switching transistor MOS8 which are configured at the secondary side of the transformer form the first energy storage circuit. The first energy storage circuit is configured to charge the energy storage elements (i.e., Lr and Cr) in the resonant circuit. The current in the first energy storage circuit flows in the direction indicated by the red dashed arrows in FIG. 8. During the first time period, the output capacitor discharges slightly, and the output capacitor and R1 form a current loop.

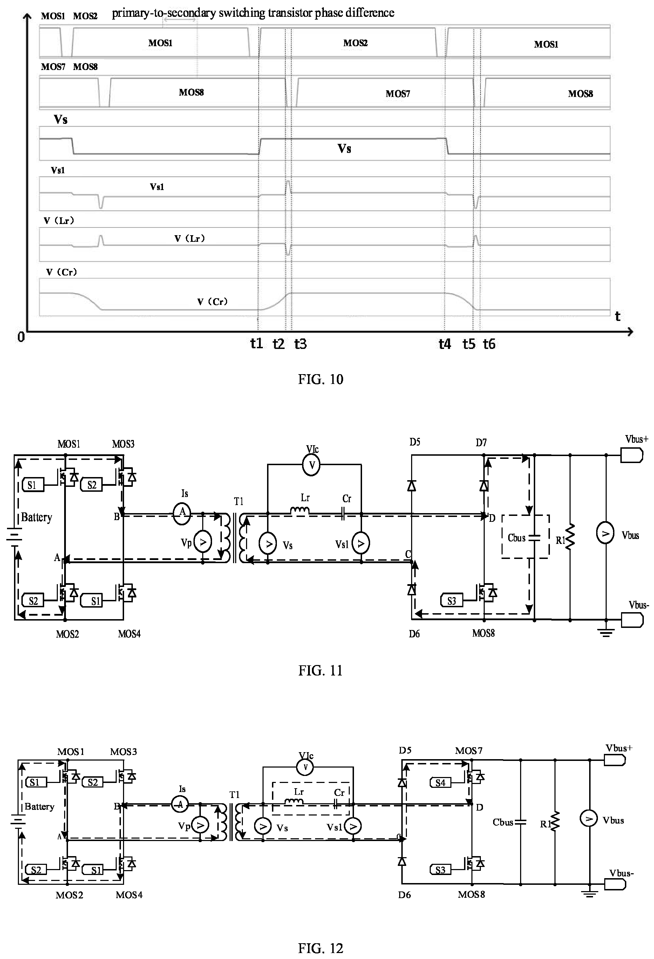

Referring to FIGS. 9 and 10, after the computer device turns off the fifth switching transistor MOSS and the sixth switching transistor MOS6, along with the change of the phase difference *Angle* between the primary-side switching transistor and the secondary-side switching transistor, the current waveforms for the switching transistors in the open-loop LLC circuit are shown in FIG. 9, and the voltage waveforms for the switching transistors in the open-loop LLC circuit are shown in FIG. 10. The time period t1-t2 shown in FIGS. 9 and 10 can be the first time period mentioned in the above embodiment.

Where $I_{(Moss6)}$, $I_{(Moss7)}$, $I_{(Moss8)}$ denote the currents of the sixth switching transistor MOS6, seventh switching transistor MOS7, and eighth switching transistor MOS8, respectively, (where the direction from the D terminal to the S terminal is the positive direction of the current). $I_{(CR)}$ and $V_{(CR)}$ denote the current and voltage of the resonant capacitor Cr (where the dotted terminal is positive), respectively. $I_{(LR)}$ and $V_{(LR)}$ denote the current and voltage of the resonant inductor Lr (the same terminal is the positive direction), respectively. Vs denotes the secondary voltage of the transformer, and Vs1 denotes a voltage of a terminal of the resonant capacitor Cr and the resonant inductor Lr at the secondary side of the transformer.

Under the excitation of Vs, the energy storage elements (i.e., Lr and Cr) in the resonant circuit begin to be charged and store energy during the first time period (t1-t2).

During a second time period, based on the primary-to-secondary switching transistor phase difference, the computer device controls the first switching transistor MOS1 to be turned off, the second switching transistor MOS2 to be turned on, the third switching transistor MOS3 to be turned on, the fourth switching transistor MOS4 to be turned off, the seventh switching transistor MOS7 to be turned off, and the eighth switching transistor MOS8 to be turned off during the second time period.

Referring to FIG. 11, the computer device controls the seventh switching transistor MOS7 to be turned off according to the phase difference *Angle* between the primary-side switching transistor and the secondary-side switching transistor, and at this time, the seventh switching transistor MOS7 is equivalent to a diode (i.e., D7 shown in FIG. 11). The second switching transistor MOS2, the third switching transistor MOS3, the transformer, the resonant circuit, the sixth switching transistor MOS6, the seventh switching transistor MOS7, and the output capacitor form the first charging circuit. The current in the first charging circuit flows in the direction indicated by the red dashed arrows in FIG. 11. The first charging circuit is configured to charge the output capacitor through the energy storage elements. The circuit current flows periodically to the output capacitor through the diode inside the seventh switching transistor MOS7 to charge the output capacitor, thereby boosting the output bus voltage across the output capacitor.

In an embodiment, the second time period follows the first time period in chronological order. Referring to FIGS. 9 and 10, the time period t2-t3 shown in FIGS. 9 and 10 can be the second time period described in the above embodiments.

Assuming $\Delta V_{bus}$ denotes the voltage boost provided by the first charging circuit to the output bus voltage across the output capacitor, then

$$\Delta V_{\text{bus}} = \frac{1}{C_{bus}} \int I_{MOS7} \, d(t), t \in [t2, t3] \, .$$

During a third time period, based on the primary-to-secondary switching transistor phase difference, the computer device controls the first switching transistor MOS1 to be turned on, the second switching transistor MOS2 to be turned off, the third switching transistor MOS3 to be turned off, the fourth switching transistor MOS4 to be turned on, the seventh switching transistor MOS7 to be turned on, and the eighth switching transistor MOS8 to be turned off during the third time period.

Referring to FIG. 12, based on the phase difference *Angle* between the primary-side switching transistor and the secondary-side switching transistor, the computer device controls a conduction time period of the first switching transistor MOS1 and a conduction time period of the seventh switching transistor MOS7 to overlap. That is, during the third time period, both the first switching transistor MOS1 and the seventh switching transistor MOS7 are in the conducting state. At this time, the first switching transistor MOS1, the fourth switching transistor MOS4, the transformer, the resonant circuit, the fifth switching transistor MOS5 (i.e., the diode D5 shown in FIG. 12), and the seventh switching transistor MOS7 form a second energy storage circuit. The second energy storage circuit is configured to charge the energy storage elements (i.e., Lr and Cr). The current in the second energy storage circuit flows in the direction as indicated by the red dashed arrows in FIG. 12. During the third time period, the output capacitor discharges slightly, and the output capacitor and R1 form a current loop.

Continue to refer to FIGS. 9 and 10. The time period t4-t5 shown in FIGS. 9 and 10 can be the third time period mentioned in the above embodiments. The third time period follows the second time period in chronological order.

During a fourth time period, based on the primary-to-secondary switching transistor phase difference, the computer device controls the first switching transistor MOS1 to be turned on, the second switching transistor MOS2 to be turned off, the third switching transistor MOS3 to be turned off, the fourth switching transistor MOS4 to be turned on, the seventh switching transistor MOS7 to be turned off, and the eighth switching transistor MOS8 to be turned off.

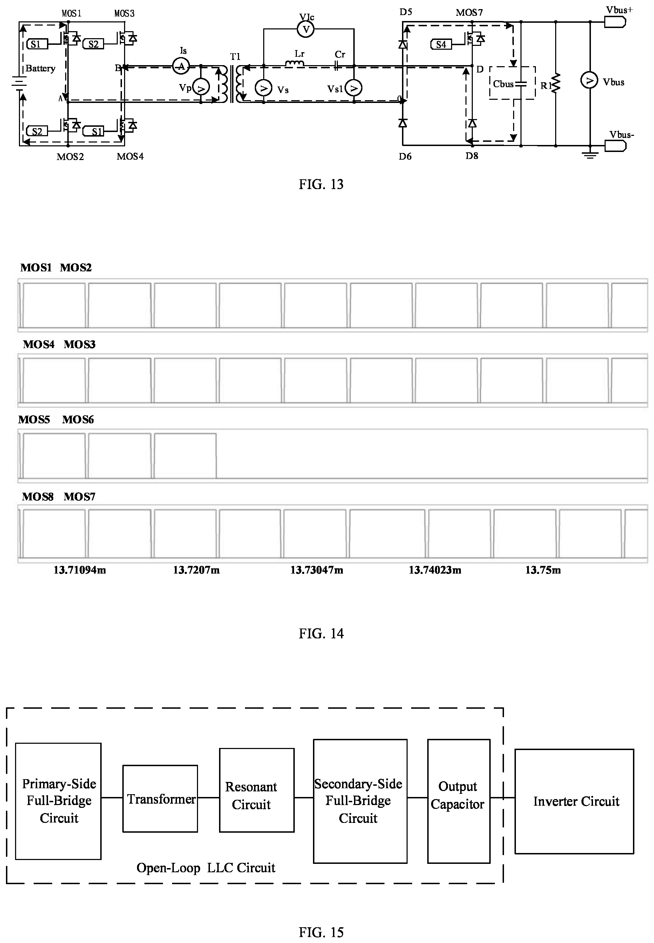

Refer to FIG. 13, the computer device controls the eighth switching transistor MOS8 to be turned off based on the phase difference *Angle* between the primary-side switching transistor and the secondary-side switching transistor. At this time, the eighth switching transistor MOS8 is turned off and is equivalent to a diode (i.e., D8 shown in FIG 13). The first switching transistor MOS1, the fourth switching transistor MOS4, the transformer, the resonant circuit, the fifth switching transistor MOS5, the eighth switching transistor MOS8, and the output capacitor form a second charging circuit. The current in the second charging circuit flows in the direction indicated by the red dashed arrows in FIG. 13. The second charging circuit is configured to charge the output capacitor through the energy storage elements. The circuit current flows periodically to the output capacitor through the diode inside the eighth switching transistor MOS8 to charge the output capacitor, thereby boosting the output bus voltage across the output capacitor.

In an embodiment, the fourth time period follows the third time period in chronological order. Continue to refer to FIGS. 9 and 10, the time period t5-t6 shown in FIGS. 9 and 10 can be the fourth time period in the embodiments above.

Assuming $\Delta V_{bus}$ denotes a voltage boost provided by the second charging circuit to the output bus voltage across the output capacitor, then

$$\Delta V_{bus} = \frac{1}{C_{bus}} \int I_{MOS8} \, d(t), t \in [t5, t6].$$

Referring to FIG. 14, the driving waveforms for switching transistors in the open-loop LLC circuit of the embodiment of the application are shown in FIG.14. The fifth switching transistor MOSS and the sixth switching transistor MOS6 are controlled to be turned off (these two switching transistors are equivalent to two diodes in the circuit). The driving waveforms for the first switching transistor MOS1 to the fourth switching transistor MOS4, the seventh switching transistor MOS7, and the eighth switching transistor MOS8 are adjusted according to the change of the primary-to-secondary switching transistor phase difference, so that there are time periods in which the first switching transistor MOS1 and the seventh switching transistor MOS7 are turned on simultaneously, and the second switching transistor MOS2 and the eighth switching transistor MOS8 are turned on simultaneously, respectively. When the second switching transistor MOS2 and the eighth switching transistor MOS8 are turned on simultaneously, the first energy storage circuit charges the energy storage elements in the resonant circuit. The first switching transistor MOS1 and the seventh switching transistor MOS7 are simultaneously turned on, and the second energy storage circuit charges the energy storage elements in the resonant circuit, so that the charged energy storage elements can be discharged to charge the output capacitor, thereby boosting the output bus voltage across the output capacitor. In this way, the boost circuit is formed based on the existing switching transistors and the energy storage elements in the open-loop LLC circuit topology to boost the output bus voltage, thus achieving the effect of increasing the output bus voltage.

In an embodiment, based on any one of the above embodiments, taking the embodiment shown in FIG. 3 as an example, and referring to FIG. 15, the voltage conversion circuit of an embodiment of this application further includes an inverter circuit, and the inverter circuit is connected between the open-loop LLC circuit and the power grid.

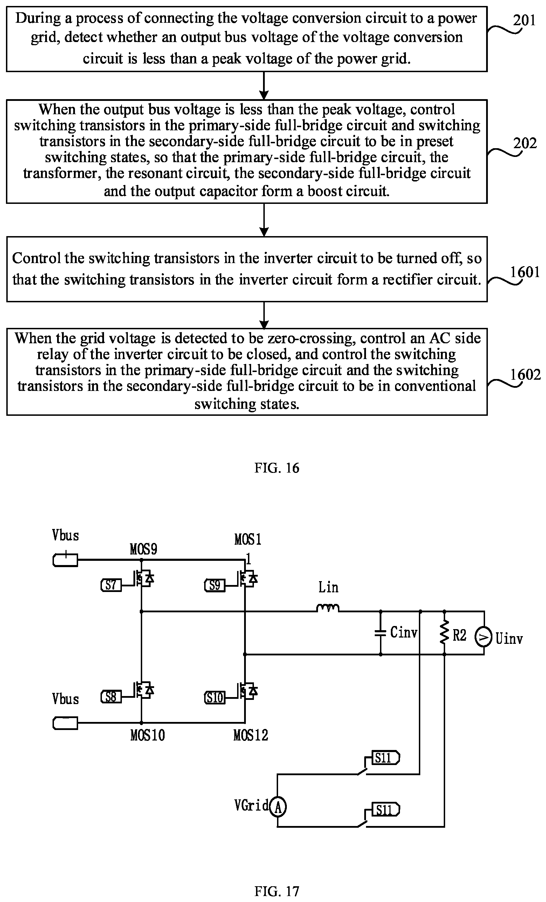

Referring to FIG. 16, after the computer device controls the switching transistors in the primary-side full-bridge circuit and the switching transistors in the secondary-side full-bridge circuit to be in the preset switching states, the grid-connected control method for the voltage conversion circuit further includes step 1601 shown in FIG. 16.

In Step 1601, control the switching transistors in the inverter circuit to be turned off, so that the switching transistors in the inverter circuit form a rectifier circuit.

For example, referring to FIG. 17, which is a circuit diagram of an inverter circuit of an embodiment, the inverter circuit may include, for example, a ninth switching transistor MOS9, a tenth switching transistor MOS10, an eleventh switching transistor MOS11, and a twelfth switching transistor MOS12 shown in FIG. 17.

When the output bus voltage of the open-loop LLC circuit is less than the peak voltage, the computer device controls the switching transistors in the primary-side full-bridge circuit and the switching transistors in the secondary-side full-bridge circuit to be in the preset switching states to form the boost circuit that boosts the output bus voltage to be equal to the peak voltage, and in this case, a grid phase-locking is performed through turning off the switching transistors in the inverter circuit. These four switching transistors shown in FIG. 17 are equivalent to four diodes in the circuit, forming the rectifier circuit to rectify the grid input.

Continue to refer to FIG. 16, the grid-connected control method for the voltage conversion circuit further includes step 1602 as shown in FIG. 16.

In Step 1602, when the zero-crossing point of the grid voltage is detected, control an AC side relay of the inverter circuit to be closed, and control the switching transistors in the primary-side full-bridge circuit and the switching transistors in the secondary-side full-bridge circuit to be in normal switching states.

The relay S11 is closed at the exact zero-crossing point of the grid voltage. At this time, since there is no voltage difference between the output bus voltage and the peak grid voltage, the grid-connected inrush current can be negligible. At the same time, the grid-connected control for the switching transistors in the primary-side full-bridge circuit and switching transistors in the secondary-side full-bridge circuit is canceled, and the conventional driving waveform for each switching transistor is restored. The bus capacitor is charged by using an uncontrolled rectification mode of the inverter circuit. At this time, the charging current of the battery is minimal, and the battery voltage gradually increases. When the charging current at the battery terminal is relatively small, the full-bridge drive of the inverter circuit is activated to operate in a power factor correction (PFC) boost mode for regulated charging.

It should be understood that, although the steps in the flowcharts involved in the embodiments described above are displayed sequentially as indicated by the arrows, these steps are not necessarily executed sequentially in the order indicated by the arrows. Unless otherwise specified herein, there is no strict order limitation for the execution of these steps, and these steps may be executed in other orders. Moreover, at least a part of the steps in the flowcharts involved in the embodiments described above may include multiple steps or multiple stages. These steps or stages are not necessarily executed at the same time, but may be executed at different times. The execution order of these steps or stages is not necessarily sequential, but may be executed in turn or alternately with other steps or at least part of the steps or stages in other steps.

Based on the same inventive concept, embodiments of the present application further provide a grid-connected control device for a voltage conversion circuit to implement the grid-connected control method for the voltage conversion circuit described above. The solutions provided by this device are similar to the solutions described in the above method. Therefore, the specific limitations in one or more embodiments of the grid-connected control device for the voltage conversion circuit provided hereinafter can be found in the limitations of the grid-connected control method for the voltage conversion circuit described above, and will not be described repeatedly herein.

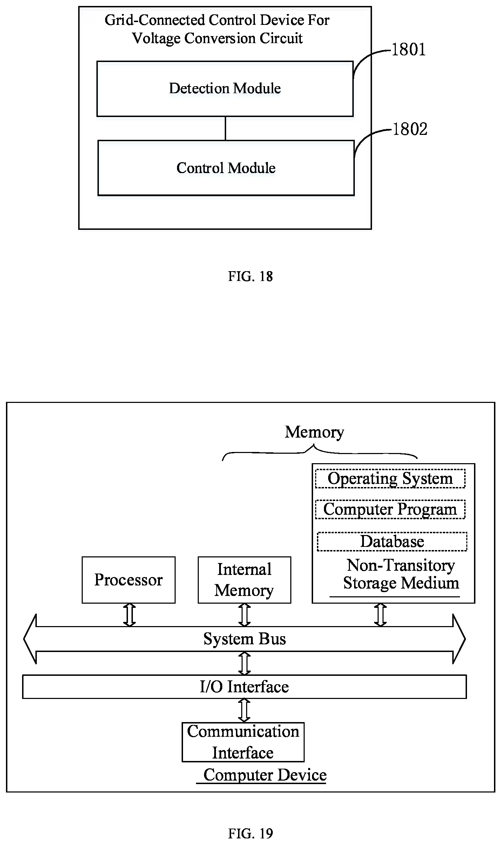

In an embodiment, as shown in FIG. 18, a grid-connected control device for a voltage conversion circuit is provided. The voltage conversion circuit includes an open-loop LLC circuit, which includes a primary-side full-bridge circuit, a transformer, a resonant circuit, a secondary-side full-bridge circuit, and an output capacitor connected in sequence. The device includes:

a detection module 1801, configured to detect whether an output bus voltage of the voltage conversion circuit is less than a peak voltage of the power grid during a process of connecting the voltage conversion circuit to a power grid; and

a control module 1802, configured to, when the output bus voltage is less than the peak voltage, control switching transistors in the primary-side full-bridge circuit and switching transistors in the secondary-side full-bridge circuit to be in preset switching states, so that the primary-side full-bridge circuit, the transformer, the resonant circuit, the secondary-side full-bridge circuit and the output capacitor form a boost circuit. The boost circuit is configured to boost the output bus voltage to be equal to the peak voltage.

In an embodiment, the control module 1802 includes:

a determining unit, configured to determine a primary-to-secondary switching transistor phase difference based on the peak voltage and the output bus voltage; and

a control unit, configured to control the switching transistors in the primary-side full-bridge circuit and the switching transistors in the secondary-side full-bridge circuit to be in preset switching states based on the primary-to-secondary switching transistor phase difference.

In an embodiment, the determining unit is specifically configured to regulate the output bus voltage by using a PI regulation algorithm to obtain the primary-to-secondary switching transistor phase difference. The peak voltage of the power grid is configured as a reference voltage for the PI regulation algorithm.

In an embodiment, the primary-side full-bridge circuit includes a first switching transistor, a second switching transistor, a third switching transistor, and a fourth switching transistor, and the secondary-side full-bridge circuit includes a fifth switching transistor, a sixth switching transistor, a seventh switching transistor, and an eighth switching transistor. The control unit is specifically configured to control the fifth switching transistor and the sixth switching transistor to be turned off and control the first switching transistor, the second switching transistor, the third switching transistor, the fourth switching transistor, the seventh switching transistor, and the eighth switching transistor to be in the preset switching states based on the primary-to-secondary switching transistor phase difference.

In an embodiment, the control unit is specifically configured to, based on the primary-to-secondary switching transistor phase difference, control the first switching transistor to be turned off, the second switching transistor to be turned on, the third switching transistor to be turned on, the fourth switching transistor to be turned off, the seventh switching transistor to be turned off, and the eighth switching transistor to be turned on during the first time period, so that a first energy storage circuit is formed by the second switching transistor, the third switching transistor, the transformer, the resonant circuit, the sixth switching transistor, and the eighth switching transistor. The first energy storage circuit is configured to charge the energy storage elements in the resonant circuit. And the control unit is specifically configured to, based on the primary-to-secondary switching transistor phase difference, control the first switching transistor to be turned off, the second switching transistor to be turned on, the third switching transistor to be turned on, the fourth switching transistor to be turned off, the seventh switching transistor to be turned off, and the eighth switching transistor to be turned off during the second time period, so that the first charging circuit is formed by the second switching transistor, the third switching transistor, the transformer, the resonant circuit, the sixth switching transistor, the seventh switching transistor, and the output capacitor. The first charging circuit is configured to charge the output capacitor through the energy storage elements to boost the output bus voltage across the output capacitor. The second time period follows the first time period in chronological order.

In an embodiment, the control unit is specifically configured to, based on the primary-to-secondary switching transistor phase difference, control the first switching transistor to be turned on, the second switching transistor to be turned off, the third switching transistor to be turned off, the fourth switching transistor to be turned on, the seventh switching transistor to be turned on, and the eighth switching transistor to be turned off during the third time period, so that a second energy storage circuit is formed by the first switching transistor, the fourth switching transistor, the transformer, the resonant circuit, the fifth switching transistor, and the seventh switching transistor. The second energy storage circuit is configured to charge the energy storage elements. And the control unit is specifically configured to, based on the primary-to-secondary switching transistor phase difference, control the first switching transistor to be turned on, the second switching transistor to be turned off, the third switching transistor to be turned off, the fourth switching transistor to be turned on, the seventh switching transistor to be turned off, and the eighth switching transistor to be turned off during a fourth time period, so that a second charging circuit is formed by the first switching transistor, the fourth switching transistor, the transformer, the resonant circuit, the fifth switching transistor, the eighth switching transistor, and the output capacitor. The second charging circuit is configured to charge the output capacitor through the energy storage elements to boost the output bus voltage across the output capacitor. The third time period follows the second time period in chronological order, and the fourth time period follows the third time period in chronological order.

In an embodiment, the voltage conversion circuit further includes an inverter circuit, and the inverter circuit is connected between the open-loop LLC circuit and the power grid. The control module 1802 is further configured to control the switching transistors in the inverter circuit to be turned off, so that the switching transistors in the inverter circuit form a rectifier circuit.

In an embodiment, the control module 1802 is further configured to, when the zero-crossing point of the grid voltage is detected, control an AC side relay of the inverter circuit to be closed, and control the switching transistors in the primary-side full-bridge circuit and the switching transistors in the secondary-side full-bridge circuit to be in normal switching states.

The grid-connected control device for the voltage conversion circuit above can be implemented entirely or partially through software, hardware, or a combination thereof. These modules can be embedded in or independent of a processor of the computer device in form of hardware, or stored in a memory of the computer device in form of software, so that the processor can call and execute the operations corresponding to each module.

In an embodiment, a computer device is provided, which may be a server, and an internal structure thereof may be as shown in FIG. 1. The computer device includes a processor, a memory, an input/output (I/O) interface, and a communication interface. The processor, the memory, and the I/O interface are connected via a system bus, and the communication interface is connected to the system bus via the I/O interface. The processor of the computer device provides computing and control capabilities. The memory of the computer device includes a non-transitory storage medium and an internal memory. The non-transitory storage medium stores an operating system, a computer program, and a database. The internal memory provides an environment for the operation of the operating system and the computer program in the non-transitory storage medium. The database of the computer device stores the grid-connected control data for the voltage conversion circuit. The I/O interface of the computer device is used to exchange information between the processor and external devices. The communication interface of the computer device is used to communicate with external terminals via a network connection. The computer program, when executed by the processor, implements the grid-connected control method for the voltage conversion circuit.

Those skilled in the art may understand that the structure shown in FIG. 19 is merely a block diagram of a partial structure related to the solution of the present application, and does not constitute a limitation on the computer device to which the solution of the present application is applied. The specific computer device may include more or fewer components than shown in the figure, or combine certain components, or have a different arrangement of components.

In an embodiment, a computer device is provided, including a memory and a processor. The memory has a computer program stored thereon, and the processor, when executing the computer program, performs the following steps of:

during a process of connecting the voltage conversion circuit to a power grid, detecting whether an output bus voltage of the voltage conversion circuit is less than a peak voltage of the power grid; and
when the output bus voltage is less than the peak voltage, controlling switching transistors in the primary-side full-bridge circuit and switching transistors in the secondary-side full-bridge circuit to be in preset switching states, so that the primary-side full-bridge circuit, the transformer, the resonant circuit, the secondary-side full-bridge circuit and the output capacitor form a boost circuit, where the boost circuit is configured to boost the output bus voltage to be equal to the peak voltage.

In an embodiment, the processor, when executing the computer program, performs the following steps of:

determining a primary-to-secondary switching transistor phase difference based on the peak voltage and the output bus voltage; and
controlling the switching transistors in the primary-side full-bridge circuit and the switching transistors in the secondary-side full-bridge circuit to be in preset switching states based on the primary-to-secondary switching transistor phase difference.

In an embodiment, the processor, when executing the computer program, performs the following step of: regulating the output bus voltage by using a PI regulation algorithm to obtain the primary-to-secondary switching transistor phase difference. The peak voltage of the power grid is configured as a reference voltage for the PI regulation algorithm.

In an embodiment, the primary-side full-bridge circuit includes a first switching transistor, a second switching transistor, a third switching transistor, and a fourth switching transistor, and the secondary-side full-bridge circuit includes a fifth switching transistor, a sixth switching transistor, a seventh switching transistor, and an eighth switching transistor. The processor, when executing the computer program, specifically performs the following steps of:

controlling the fifth switching transistor and the sixth switching transistor to be turned off; and
controlling the first switching transistor, the second switching transistor, the third switching transistor, the fourth switching transistor, the seventh switching transistor, and the eighth switching transistor to be in the preset switching states based on the primary-to-secondary switching transistor phase difference.

In an embodiment, the processor, when executing the computer program, specifically performs the following steps of:

based on the primary-to-secondary switching transistor phase difference, controlling the first switching transistor to be turned off, the second switching transistor to be turned on, the third switching transistor to be turned on, the fourth switching transistor to be turned off, the seventh switching transistor to be turned off, and the eighth switching transistor to be turned on during the first time period, so that a first energy storage circuit is formed by the second switching transistor, the third switching transistor, the transformer, the resonant circuit, the sixth switching transistor, and the eighth switching transistor; where the first energy storage circuit is configured to charge the energy storage elements in the resonant circuit; and
based on the primary-to-secondary switching transistor phase difference, controlling the first switching transistor to be turned off, the second switching transistor to be turned on, the third switching transistor to be turned on, the fourth switching transistor to be turned off, the seventh switching transistor to be turned off, and the eighth switching transistor to be turned off during the second time period, so that the first charging circuit is formed by the second switching transistor, the third switching transistor, the transformer, the resonant circuit, the sixth switching transistor, the seventh switching transistor, and the output capacitor; where the first charging circuit is configured to charge the output capacitor through the energy storage elements to boost the output bus voltage across the output capacitor, and the second time period follows the first time period in chronological order.

In an embodiment, the processor, when executing the computer program, specifically performs the following steps of:

based on the primary-to-secondary switching transistor phase difference, controlling the first switching transistor to be turned on, the second switching transistor to be turned off, the third switching transistor to be turned off, the fourth switching transistor to be turned on, the seventh switching transistor to be turned on, and the eighth switching transistor to be turned off during the third time period, so that a second energy storage circuit is formed by the first switching transistor, the fourth switching transistor, the transformer, the resonant circuit, the fifth switching transistor, and the seventh switching transistor; where the second energy storage circuit is configured to charge the energy storage elements; and
based on the primary-to-secondary switching transistor phase difference, controlling the first switching transistor to be turned on, the second switching transistor to be turned off, the third switching transistor to be turned off, the fourth switching transistor to be turned on, the seventh switching transistor to be turned off, and the eighth switching transistor to be turned off during a fourth time period, so that a second charging circuit is formed by the first switching transistor, the fourth switching transistor, the transformer, the resonant circuit, the fifth switching transistor, the eighth switching transistor, and the output capacitor. The second charging circuit is configured to charge the output capacitor through the energy storage elements to boost the output bus voltage across the output capacitor. The third time period follows the second time period in chronological order, and the fourth time period follows the third time period in chronological order.

In an embodiment, the processor, when executing the computer program, specifically performs the following step of:
controlling the switching transistors in the inverter circuit to be turned off, so that the switching transistors in the inverter circuit form a rectifier circuit.

In an embodiment, the processor, when executing the computer program, specifically performs the following step of:
when the zero-crossing point of the grid voltage is detected, controlling an AC side relay of the inverter circuit to be closed, and controlling the switching transistors in the primary-side full-bridge circuit and the switching transistors in the secondary-side full-bridge circuit to be in normal switching states.

In an embodiment, a computer-readable storage medium is provided, having a computer program stored thereon. The computer program, when executed by a processor, performs the following steps of:

during a process of connecting the voltage conversion circuit to a power grid, detecting whether an output bus voltage of the voltage conversion circuit is less than a peak voltage of the power grid; and
when the output bus voltage is less than the peak voltage, controlling switching transistors in the primary-side full-bridge circuit and switching transistors in the secondary-side full-bridge circuit to be in preset switching states, so that the primary-side full-bridge circuit, the transformer, the resonant circuit, the secondary-side full-bridge circuit and the output capacitor form a boost circuit, where the boost circuit is configured to boost the output bus voltage to be equal to the peak voltage.

In an embodiment, the computer program, when executed by a processor, performs the following steps of:

determining a primary-to-secondary switching transistor phase difference based on the peak voltage and the output bus voltage; and
controlling the switching transistors in the primary-side full-bridge circuit and the switching transistors in the secondary-side full-bridge circuit to be in preset switching states based on the primary-to-secondary switching transistor phase difference.

In an embodiment, the computer program, when executed by a processor, performs the following step of:
regulating the output bus voltage by using a PI regulation algorithm to obtain the primary-to-secondary switching transistor phase difference. The peak voltage of the power grid is configured as a reference voltage for the PI regulation algorithm.

In an embodiment, the primary-side full-bridge circuit includes a first switching transistor, a second switching transistor, a third switching transistor, and a fourth switching transistor, and the secondary-side full-bridge circuit includes a fifth switching transistor, a sixth switching transistor, a seventh switching transistor, and an eighth switching transistor. The computer program, when executed by a processor, performs the following steps of:

controlling the fifth switching transistor and the sixth switching transistor to be turned off; and
controlling the first switching transistor, the second switching transistor, the third switching transistor, the fourth switching transistor, the seventh switching transistor, and the eighth switching transistor to be in the preset switching states based on the primary-to-secondary switching transistor phase difference.

In an embodiment, the computer program, when executed by a processor, performs the following steps of:

based on the primary-to-secondary switching transistor phase difference, controlling the first switching transistor to be turned off, the second switching transistor to be turned on, the third switching transistor to be turned on, the fourth switching transistor to be turned off, the seventh switching transistor to be turned off, and the eighth switching transistor to be turned on during the first time period, so that a first energy storage circuit is formed by the second switching transistor, the third switching transistor, the transformer, the resonant circuit, the sixth switching transistor, and the eighth switching transistor; where the first energy storage circuit is configured to charge the energy storage elements in the resonant circuit; and
based on the primary-to-secondary switching transistor phase difference, controlling the first switching transistor to be turned off, the second switching transistor to be turned on, the third switching transistor to be turned on, the fourth switching transistor to be turned off, the seventh switching transistor to be turned off, and the eighth switching transistor to be turned off during the second time period, so that the first charging circuit is formed by the second switching transistor, the third switching transistor, the transformer, the resonant circuit, the sixth switching transistor, the seventh switching transistor, and the output capacitor; where the first charging circuit is configured to charge the output capacitor through the energy storage elements to boost the output bus voltage across the output capacitor, and the second time period follows the first time period in chronological order.

In an embodiment, the computer program, when executed by a processor, performs the following steps of:

based on the primary-to-secondary switching transistor phase difference, controlling the first switching transistor to be turned on, the second switching transistor to be turned off, the third switching transistor to be turned off, the fourth switching transistor to be turned on, the seventh switching transistor to be turned on, and the eighth switching transistor to be turned off during the third time period, so that a second energy storage circuit is formed by the first switching transistor, the fourth switching transistor, the transformer, the resonant circuit, the fifth switching transistor, and the seventh switching transistor; where the second energy storage circuit is configured to charge the energy storage elements; and based on the primary-to-secondary switching transistor phase difference, controlling the first switching transistor to be turned on, the second switching transistor to be turned off, the third switching transistor to be turned off, the fourth switching transistor to be turned on, the seventh switching transistor to be turned off, and the eighth switching transistor to be turned off during a fourth time period, so that a second charging circuit is formed by the first switching transistor, the fourth switching transistor, the transformer, the resonant circuit, the fifth switching transistor, the eighth switching transistor, and the output capacitor. The second charging circuit is configured to charge the output capacitor through the energy storage elements to boost the output bus voltage across the output capacitor. The third time period follows the second time period in chronological order, and the fourth time period follows the third time period in chronological order.

In an embodiment, the computer program, when executed by a processor, performs the following step of:
controlling the switching transistors in the inverter circuit to be turned off, so that the switching transistors in the inverter circuit form a rectifier circuit.

In an embodiment, the computer program, when executed by a processor, performs the following step of:
when the zero-crossing point of the grid voltage is detected, controlling an AC side relay of the inverter circuit to be closed, and controlling the switching transistors in the primary-side full-bridge circuit and the switching transistors in the secondary-side full-bridge circuit to be in normal switching states.

In an embodiment, a computer program product is provided, including a computer program. The computer program, when executed by a processor, causes the processor to perform the following steps of:

during a process of connecting the voltage conversion circuit to a power grid, detecting whether an output bus voltage of the voltage conversion circuit is less than a peak voltage of the power grid; and
when the output bus voltage is less than the peak voltage, controlling switching transistors in the primary-side full-bridge circuit and switching transistors in the secondary-side full-bridge circuit to be in preset switching states, so that the primary-side full-bridge circuit, the transformer, the resonant circuit, the secondary-side full-bridge circuit and the output capacitor form a boost circuit, where the boost circuit is configured to boost the output bus voltage to be equal to the peak voltage.

In an embodiment, the computer program, when executed by a processor, causes the processor to perform the following steps of:

determining a primary-to-secondary switching transistor phase difference based on the peak voltage and the output bus voltage; and
controlling the switching transistors in the primary-side full-bridge circuit and the switching transistors in the secondary-side full-bridge circuit to be in preset switching states based on the primary-to-secondary switching transistor phase difference.

In an embodiment, the computer program, when executed by a processor, causes the processor to perform the following step of:
regulating the output bus voltage by using a PI regulation algorithm to obtain the primary-to-secondary switching transistor phase difference. The peak voltage of the power grid is configured as a reference voltage for the PI regulation algorithm.

In an embodiment, the primary-side full-bridge circuit includes a first switching transistor, a second switching transistor, a third switching transistor, and a fourth switching transistor, and the secondary-side full-bridge circuit includes a fifth switching transistor, a sixth switching transistor, a seventh switching transistor, and an eighth switching transistor. The computer program, when executed by a processor, causes the processor to perform the following steps of:

controlling the fifth switching transistor and the sixth switching transistor to be turned off; and
controlling the first switching transistor, the second switching transistor, the third switching transistor, the fourth switching transistor, the seventh switching transistor, and the eighth switching transistor to be in the preset switching states based on the primary-to-secondary switching transistor phase difference.

In an embodiment, the computer program, when executed by a processor, causes the processor to perform the following steps of:

based on the primary-to-secondary switching transistor phase difference, controlling the first switching transistor to be turned off, the second switching transistor to be turned on, the third switching transistor to be turned on, the fourth switching transistor to be turned off, the seventh switching transistor to be turned off, and the eighth switching transistor to be turned on during the first time period, so that a first energy storage circuit is formed by the second switching transistor, the third switching transistor, the transformer, the resonant circuit, the sixth switching transistor, and the eighth switching transistor; where the first energy storage circuit is configured to charge the energy storage elements in the resonant circuit; and

based on the primary-to-secondary switching transistor phase difference, controlling the first switching transistor to be turned off, the second switching transistor to be turned on, the third switching transistor to be turned on, the fourth switching transistor to be turned off, the seventh switching transistor to be turned off, and the eighth switching transistor to be turned off during the second time period, so that the first charging circuit is formed by the second switching transistor, the third switching transistor, the transformer, the resonant circuit, the sixth switching transistor, the seventh switching transistor, and the output capacitor; where the first charging circuit is configured to charge the output capacitor through the energy storage elements to boost the output bus voltage across the output capacitor, and the second time period follows the first time period in chronological order.

In an embodiment, the computer program, when executed by a processor, causes the processor to perform the following steps of:

based on the primary-to-secondary switching transistor phase difference, controlling the first switching transistor to be turned on, the second switching transistor to be turned off, the third switching transistor to be turned off, the fourth switching transistor to be turned on, the seventh switching transistor to be turned on, and the eighth switching transistor to be turned off during the third time period, so that a second energy storage circuit is formed by the first switching transistor, the fourth switching transistor, the transformer, the resonant circuit, the fifth switching transistor, and the seventh switching transistor; where the second energy storage circuit is configured to charge the energy storage elements; and
based on the primary-to-secondary switching transistor phase difference, controlling the first switching transistor to be turned on, the second switching transistor to be turned off, the third switching transistor to be turned off, the fourth switching transistor to be turned on, the seventh switching transistor to be turned off, and the eighth switching transistor to be turned off during a fourth time period, so that a second charging circuit is formed by the first switching transistor, the fourth switching transistor, the transformer, the resonant circuit, the fifth switching transistor, the eighth switching transistor, and the output capacitor. The second charging circuit is configured to charge the output capacitor through the energy storage elements to boost the output bus voltage across the output capacitor. The third time period follows the second time period in chronological order, and the fourth time period follows the third time period in chronological order.

In an embodiment, the computer program, when executed by a processor, causes the processor to perform the following step of:
controlling the switching transistors in the inverter circuit to be turned off, so that the switching transistors in the inverter circuit form a rectifier circuit.

In an embodiment, the computer program, when executed by a processor, causes the processor to perform the following step of:
when the zero-crossing point of the grid voltage is detected, controlling an AC side relay of the inverter circuit to be closed, and controlling the switching transistors in the primary-side full-bridge circuit and the switching transistors in the secondary-side full-bridge circuit to be in normal switching states.

Those ordinary skilled in the art will understand that all or part of the processes in the methods of the above embodiments may be implemented by instructing related hardware through computer-readable instructions. These computer-readable instructions may be stored in a non-transitory computer-readable storage medium. When executed, these computer-readable instructions may include the processes of the embodiments of the above methods. Any references to memory, databases, or other media used in the embodiments provided in this application may include at least one of non-transitory and volatile memory. Non-transitory memory may include read-only memory (ROM), magnetic tape, floppy disk, flash memory, optical memory, high-density embedded non-volatile memory, resistive random-access memory (ReRAM), magnetic random-access memory (MRAM), ferroelectric random-access memory (FRAM), phase change memory (PCM), graphene memory, etc. Volatile memory may include random access memory (RAM) or external cache memory, etc. By way of illustration and not limitation, RAM may take many forms, such as Static Random Access Memory (SRAM) or Dynamic Random Access Memory (DRAM). The databases involved in the embodiments provided in this application may include at least one of relational database and non-relational database. Non-relational databases may include, but are not limited to, blockchain-based distributed databases. The processors involved in the embodiments provided in this application may be general-purpose processors, central processing units, graphics processing units, digital signal processors, programmable logic devices, quantum computing-based data processing logic devices, artificial intelligence (AI) processors, etc., and are not limited thereto.

The technical features of the above embodiments can be combined in any way. For the sake of brevity, not all possible combinations of the technical features in the above embodiments are described. However, as long as there is no contradiction in the combinations of these technical features, these combinations should be considered to be within the scope of this application.

The embodiments described above are merely illustrative of several implementations of this application. Although the descriptions of the embodiments are relatively specific and detailed, they should not be construed as limiting the scope of the patent application. It should be noted that, for those ordinary skilled in the art, various modifications and improvements can be made without departing from the concept of this application, and all these modifications and improvements fall within the protection scope of this application. Therefore, the protection scope of this patent application should be determined by the appended claims.

**Claims**

1. A grid-connected control method for a voltage conversion circuit, wherein the voltage conversion circuit comprises an open-loop inductor-inductor-capacitor (LLC) circuit, the LLC circuit comprises a primary-side full-bridge circuit, a transformer, a resonant circuit, a secondary-side full-bridge circuit, and an output capacitor connected in sequence, and the method comprises:

   detecting whether an output bus voltage of the voltage conversion circuit is less than a peak voltage of a power grid during a process of connecting the voltage conversion circuit to the power grid; and
   controlling switching transistors in the primary-side full-bridge circuit and switching transistors in the secondary-side full-bridge circuit to be in preset switching states when the output bus voltage is less than the peak voltage, so that the primary-side full-bridge circuit, the transformer, the resonant circuit, the secondary-side full-bridge circuit and the output capacitor form a boost circuit, and the boost circuit is configured to boost the output bus voltage to be equal to the peak voltage.

2. The method according to claim 1, wherein controlling the switching transistors in the primary-side full-bridge circuit and the switching transistors in the secondary-side full-bridge circuit to be in the preset switching states comprises:

   determining a primary-to-secondary switching transistor phase difference based on the peak voltage and the output bus voltage; and
   controlling the switching transistors in the primary-side full-bridge circuit and the switching transistors in the secondary-side full-bridge circuit to be in the preset switching states based on the primary-to-secondary switching transistor phase difference.

3. The method according to claim 2, wherein determining the primary-to-secondary switching transistor phase difference based on the peak voltage and the output bus voltage comprises:
   regulating the output bus voltage by using a proportional integral (PI) regulation algorithm to obtain the primary-to-secondary switching transistor phase difference, wherein the peak voltage of the power grid is configured as a reference voltage for the PI regulation algorithm.

4. The method according to claim 2, wherein the primary-side full-bridge circuit comprises a first switching transistor, a second switching transistor, a third switching transistor, and a fourth switching transistor; the secondary-side full-bridge circuit comprises a fifth switching transistor, a sixth switching transistor, a seventh switching transistor, and an eighth switching transistor; controlling the switching transistors in the primary-side full-bridge circuit and the switching transistors in the secondary-side full-bridge circuit to be in the preset switching states based on the primary-to-secondary switching transistor phase difference, comprises:

   controlling the fifth switching transistor and the sixth switching transistor to be turned off; and controlling the first switching transistor, the second switching transistor, the third switching transistor, the fourth switching transistor, the seventh switching transistor, and the eighth switching transistor to be in the preset switching states based on the primary-to-secondary switching transistor phase difference.

5. The method according to claim 4, wherein controlling the first switching transistor, the second switching transistor, the third switching transistor, the fourth switching transistor, the seventh switching transistor, and the eighth switching transistor to be in the preset switching states based on the primary-to-secondary switching transistor phase difference, comprises:

   based on the primary-to-secondary switching transistor phase difference, controlling the first switching transistor to be turned off, the second switching transistor to be turned on, the third switching transistor to be turned on, the fourth switching transistor to be turned off, the seventh switching transistor to be turned off, and the eighth switching transistor to be turned on during a first time period, so that a first energy storage circuit is formed by the second switching transistor, the third switching transistor, the transformer, the resonant circuit, the sixth switching transistor, and the eighth switching transistor, and the first energy storage circuit is configured to charge energy storage elements in the resonant circuit; and

based on the primary-to-secondary switching transistor phase difference, controlling the first switching transistor to be turned off, the second switching transistor to be turned on, the third switching transistor to be turned on, the fourth switching transistor to be turned off, the seventh switching transistor to be turned off, and the eighth switching transistor to be turned off during a second time period, so that a first charging circuit is formed by the second switching transistor, the third switching transistor, the transformer, the resonant circuit, the sixth switching transistor, the seventh switching transistor, and the output capacitor, and the first charging circuit is configured to charge the output capacitor through the energy storage elements to boost the output bus voltage across the output capacitor; and the second time period following the first time period in chronological order.

6. The method according to claim 5, wherein controlling the first switching transistor, the second switching transistor, the third switching transistor, the fourth switching transistor, the seventh switching transistor, and the eighth switching transistor to be in the preset switching states based on the primary-to-secondary switching transistor phase difference, further comprises:

based on the primary-to-secondary switching transistor phase difference, controlling the first switching transistor to be turned on, the second switching transistor to be turned off, the third switching transistor to be turned off, the fourth switching transistor to be turned on, the seventh switching transistor to be turned on, and the eighth switching transistor to be turned off during a third time period, so that a second energy storage circuit is formed by the first switching transistor, the fourth switching transistor, the transformer, the resonant circuit, the fifth switching transistor, and the seventh switching transistor, and the second energy storage circuit is configured to charge the energy storage elements; and

based on the primary-to-secondary switching transistor phase difference, controlling the first switching transistor to be turned on, the second switching transistor to be turned off, the third switching transistor to be turned off, the fourth switching transistor to be turned on, the seventh switching transistor to be turned off, and the eighth switching transistor to be turned off during a fourth time period, so that a second charging circuit is formed by the first switching transistor, the fourth switching transistor, the transformer, the resonant circuit, the fifth switching transistor, the eighth switching transistor, and the output capacitor, and the second charging circuit is configured to charge the output capacitor through the energy storage elements to boost the output bus voltage across the output capacitor; and the third time period following the second time period in chronological order, and the fourth time period following the third time period in chronological order.

7. The method according to any one of claims 1-6, wherein the voltage conversion circuit further comprises an inverter circuit, and the inverter circuit is connected between the open-loop LLC circuit and the power grid; and after controlling the switching transistors in the primary-side full-bridge circuit and the switching transistors in the secondary-side full-bridge circuit to be in the preset switching states, the method further comprises:
controlling switching transistors in the inverter circuit to be turned off, so that the switching transistors in the inverter circuit form a rectifier circuit.

8. The method according to claim 7, wherein the method further comprises:
when a zero-crossing point of the grid voltage is detected, controlling an alternating current (AC) side relay of the inverter circuit to be closed, and controlling the switching transistors in the primary-side full-bridge circuit and the switching transistors in the secondary-side full-bridge circuit to be in normal switching states.

9. A grid-connected control device for a voltage conversion circuit, wherein the voltage conversion circuit comprises an open-loop inductor-inductor-capacitor (LLC) circuit, the LLC circuit comprises a primary-side full-bridge circuit, a transformer, a resonant circuit, a secondary-side full-bridge circuit, and an output capacitor connected in sequence, and the device comprises:

a detection module, configured to detect whether an output bus voltage of the voltage conversion circuit is less than a peak voltage of a power grid during a process of connecting the voltage conversion circuit to the power grid; and
a control module, configured to, when the output bus voltage is less than the peak voltage, control switching transistors in the primary-side full-bridge circuit and switching transistors in the secondary-side full-bridge circuit to be in preset switching states, so that the primary-side full-bridge circuit, the transformer, the resonant circuit, the secondary-side full-bridge circuit and the output capacitor form a boost circuit, and the boost circuit is configured to boost the output bus voltage to be equal to the peak voltage.

10. A computer-readable storage medium, having a computer program stored thereon, wherein the computer program, when executed by a processor, performs steps of the method according to any one of claims 1 to 8.

| Battery | — | Voltage Conversion Circuit | — | Power Grid |

Computer Device

FIG. 1

detecting whether an output bus voltage of the voltage conversion circuit is less than a peak voltage of a power grid during a process of connecting the voltage conversion circuit to the power grid — 201

controlling switching transistors in the primary-side full-bridge circuit and switching transistors in the secondary-side full-bridge circuit to be in preset switching states when the output bus voltage is less than the peak voltage, so that the primary-side full-bridge circuit, the transformer, the resonant circuit, the secondary-side full-bridge circuit and the output capacitor form a boost circuit, and the boost circuit is configured to boost the output bus voltage to be equal to the peak voltage — 202

FIG. 2

| Secondary-Side Full-Bridge Circuit | — | Transformer | — | Resonant Circuit | — | Secondary-Side Full-Bridge Circuit | — | Output Capacitor |

Open-Loop LLC Circuit

FIG. 3

determining a phase difference between a primary switching transistor and a secondary switching transistor based on the peak voltage and the output bus voltage — 401

controlling the switching transistors in the primary-side full-bridge circuit and the switching transistors in the secondary-side full-bridge circuit to be in the preset switching states based on the phase difference between the primary switching transistor and the secondary switching transistor — 402

FIG. 4

FIG. 5

MOS1 MOS2

MOS4 MOS3

MOS5 MOS6

MOS8 MOS7

6.91406m　　6.92383m　　6.93359m　　6.94336m

FIG. 6

controlling the fifth switching transistor and the sixth switching transistor to be turned off — 701

controlling the first switching transistor, the second switching transistor , the third switching transistor, the fourth switching transistor, the seventh switching transistor, and the eighth switching transistor to be in the preset switching states based on the phase difference between the primary-side switching transistor and the secondary-side switching transistor — 702

FIG. 7

FIG. 8

FIG. 9

FIG. 10

FIG. 11

FIG. 12

FIG. 13

MOS1 MOS2

MOS4 MOS3

MOS5 MOS6

MOS8 MOS7

13.71094m    13.7207m    13.73047m    13.74023m    13.75m

FIG. 14

Primary-Side Full-Bridge Circuit — Transformer — Resonant Circuit — Secondary-Side Full-Bridge Circuit — Output Capacitor — Inverter Circuit

Open-Loop LLC Circuit

FIG. 15

| During a process of connecting the voltage conversion circuit to a power grid, detect whether an output bus voltage of the voltage conversion circuit is less than a peak voltage of the power grid. | 201 |

| When the output bus voltage is less than the peak voltage, control switching transistors in the primary-side full-bridge circuit and switching transistors in the secondary-side full-bridge circuit to be in preset switching states, so that the primary-side full-bridge circuit, the transformer, the resonant circuit, the secondary-side full-bridge circuit and the output capacitor form a boost circuit. | 202 |

| Control the switching transistors in the inverter circuit to be turned off, so that the switching transistors in the inverter circuit form a rectifier circuit. | 1601 |

| When the grid voltage is detected to be zero-crossing, control an AC side relay of the inverter circuit to be closed, and control the switching transistors in the primary-side full-bridge circuit and the switching transistors in the secondary-side full-bridge circuit to be in conventional switching states. | 1602 |

FIG. 16

FIG. 17

Grid-Connected Control Device For
Voltage Conversion Circuit

Detection Module — 1801

Control Module — 1802

FIG. 18

Memory

Operating System

Computer Program

Database

Non-Transitory
Storage Medium

Processor

Internal
Memory

System Bus

I/O Interface

Communication
Interface

Computer Device

FIG. 19

## INTERNATIONAL SEARCH REPORT

| | |
|---|---|
| International application No. | |
| | **PCT/CN2025/110675** |

| A. | CLASSIFICATION OF SUBJECT MATTER |
|---|---|
| | H02M 3/335(2006.01)i |

According to International Patent Classification (IPC) or to both national classification and IPC

| B. | FIELDS SEARCHED |
|---|---|

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 母线, 峰值, 电压, 并网, 升压, 光伏, 全桥, bus voltage, peak voltage, merged, boost+, full 1w bridge

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 119070650 A (SHENZHEN POWEROAK NEW ENERGY CO., LTD.) 03 December 2024 (2024-12-03) claims 1-10 | 1-10 |
| X | CN 116155108 A (SHENZHEN DIWEI ELECTRICAL CO., LTD.) 23 May 2023 (2023-05-23) description, paragraphs 38-63, and figures 4-8 | 1, 9-10 |
| X | CN 114301300 A (LIUSANHI) 08 April 2022 (2022-04-08) description, paragraphs 47-73, and figures 1-8 | 1, 9-10 |
| A | CN 102306938 A (BEIJING SOARING ELECTRIC TECHNOLOGY CO., LTD.) 04 January 2012 (2012-01-04) entire document | 1-10 |
| A | CN 115764883 A (SUNGROW POWER SUPPLY CO., LTD.) 07 March 2023 (2023-03-07) entire document | 1-10 |
| A | US 2019326811 A1 (SHANGHAI TUITUO TECHNOLOGY CO., LTD.) 24 October 2019 (2019-10-24) entire document | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 October 2025** | **20 October 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2025/110675** |

| Patent document cited in search report | | | Publication date (day/month/year) | Patent family member(s) | | | Publication date (day/month/year) |
| --- | --- | --- | --- | --- | --- | --- | --- |
| CN | 119070650 | A | 03 December 2024 | None | | | |
| CN | 116155108 | A | 23 May 2023 | None | | | |
| CN | 114301300 | A | 08 April 2022 | None | | | |
| CN | 102306938 | A | 04 January 2012 | None | | | |
| CN | 115764883 | A | 07 March 2023 | None | | | |
| US | 2019326811 | A1 | 24 October 2019 | CN | 108512431 | A | 07 September 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2024115465240